Europäisches Patentamt

European Patent Office

Office européen des brevets

(11) Veröffentlichungsnummer : **0 014 879**
**B1**

(12) **EUROPÄISCHE PATENTSCHRIFT**

(45) Veröffentlichungstag der Patentschrift :
24.02.82

(51) Int. Cl.³ : **C 08 L 77/00, C 08 L 51/04**

(21) Anmeldenummer : **80100532.3**

(22) Anmeldetag : **04.02.80**

(54) **Polymermischungen aus amorphen Polyamiden und Pfropfpolymeren aus Styrol und Acrylnitril auf Polybutadien.**

(30) Priorität : **17.02.79 DE 2906222**

(43) Veröffentlichungstag der Anmeldung :
**03.09.80 (Patentblatt 80/18)**

(45) Bekanntmachung des Hinweises auf die Patenterteilung : **24.02.82 Patentblatt 82/08**

(84) Benannte Vertragsstaaten :
**BE CH DE FR GB IT NL SE**

(56) Entgegenhaltungen :
**FR - A - 2 343 018**
**US - A - 3 218 371**
**US - A - 4 041 103**

(73) Patentinhaber : **BAYER AG**
**Zentralbereich Patente, Marken und Lizenzen**
**D-5090 Leverkusen 1, Bayerwerk (DE)**

(72) Erfinder : **Nielinger, Werner, Dr.**
**Bärenstrasse 21**
**D-4150 Krefeld (DE)**
Erfinder : **Brassat, Bert, Dr.**
**Bethelstrasse 24**
**D-4150 Krefeld (DE)**
Erfinder : **Binsack, Rudolf, Dr.**
**Bethelstrasse 4a**
**D-4150 Krefeld (DE)**
Erfinder : **Neuray, Dieter, Dr.**
**Buschstrasse 149**
**D-4150 Krefeld (DE)**

Imprimerie Jouve, 18, rue St-Denis, 75001 Paris, France

Polymermischungen aus amorphen Polyamiden und Pfropfpolymeren aus Styrol und Acrylnitril auf
Polybutadien

Die Erfindung betrifft Mischungen aus amorphen Polyamiden und Pfropfpolymeren aus Styrol und Acrylnitril auf Polybutadien.

Polyamide besitzen eine Reihe von hervorragenden Eigenschaften, wie Zähigkeit, Steifigkeit und Härte, wodurch sie sich besonders zur Herstellung von Formteilen auf dem technischen Sektor eignen.

Bei teilkristallinen Polyamiden werden die optimalen Zähigkeitswerte jedoch erst nach Aufnahme einer bestimmten Menge Wasser erreicht. Dieser zeitraubende, als Konditionierung bekannte Prozeß führt aber auch zu einer Abnahme der Härte, des E-Moduls und der Steifigkeit.

Bei den nicht kristallinen Polyamiden wird eine derartig starke Abhängigkeit der Eigenschaften vom Wassergehalt nicht beobachtet. Daher wird auch das relativ niedrige Zähigkeitsniveau der amorphen Polyamide durch eine Konditionierung kaum verbessert.

Es sind bereits eine Reihe von Vorschlägen gemacht worden, das Eigenschaftsbild von teilkristallinen oder amorphen Polyamiden zu verbessern, beispielsweise durch Mischen mit anderen Polymeren.

Gemäß DE-OS 2 403 889 hat man amorphe Polyamide mit schlagzähmodifizierten Polystyrolen gemischt, wobei die schlagzäh-modifizierten Polystyrole u.a. auch Mischungen oder zumindest teilweise gepfropte Produkte aus wenigstens 60 Gew.-% Styrol- oder Styrol/Acrylnitril-Einheiten und höchstens 40 Gew.-% Polybutadien sein können. Die Polymerlegierungen zeichnen sich durch ihre Härte, Steifigkeit und ihr gutes Verarbeitungsverhalten aus, sind aber infolge ihrer geringen Zähigkeit sehr spröde und daher als schlagzähe Konstruktionswerkstoffe ungeeignet.

Ferner ist aus DE-AS 1 273 184 bekannt, Polycaprolactam Pfropfpolymerisate aus 10-60 Gew.-% Polybutadien als Pfropfgrundlage und 40-90 Gew.-% aufgepfropften Einheiten aus Styrol und Acrylnitril, zur Verbesserung der Zugfestigkeit zuzumischen. Aber erst bei Zusätzen von mehr als 70 Gew.-% des Pfropfpolymerisats kann eine Erhöhung der Kerbschlagzähigkeit des Polycaprolactams beobachtet werden.

Es war daher überraschend und nicht vorherzusehen, daß bereits der Zusatz relativ kleiner Mengen der genannten Pfropfpolymerisate bei amorphen Polyamiden zu einer sprunghaften Verbesserung der Zähigkeit führt. Die Zähigkeitswerte durchlaufen dabei überraschenderweise ein Maximum. Die Wärmeformbeständigkeit der Mischungen bleibt bis zum Bereich des Maximums nahezu konstant. Andere Eigenschaften, wie Biegefestigkeit oder Kugeldruckhärte, nehmen nur geringfügig ab.

Gegenstand der Erfindung sind daher Polymer-Mischungen aus amorphen Polyamiden und Pfropfpolymerisaten aus Styrol und Acrylnitril auf Polybutadien oder Copolymerisate des Butadien und $\alpha,\beta$-ungesättigten Monomeren, die sich durch hohe Zähigkeit bei gleichzeitig hoher Wärmeformbeständigkeit, Steifigkeit und Härte auszeichnen.

Die erfindungsgemäßen Polymer-Mischungen bestehen aus 99-40, vorzugsweise 95-70 Gew.-% eines amorphen Polyamids und 1-60, vorzugsweise 5-30 Gew.-% eines Pfropfpolymerisats aus a) 45-95, vorzugsweise 50-90 Gew.-% Polybutadien oder Copolymerisaten des Butadiens und $\alpha, \beta$ ungesättigten Monomeren, die zu wenigstens 70 Gew.-% aus Butadien bestehen, und b) 5-55, vorzugsweise 10-50 Gew.-% aufgepfropften Einheiten von Styrol und Acrylnitril.

Als amorphe Polyamide kommen vorzugsweise Produkte in Betracht, wie sie zu den deutschen Offenlegungsschriften 1 595 354, 1 770 336, 1 645 537, 2 156 723, 2 635 085, 2 647 311 sowie in den US-Patentschriften 3 150 117 und 3 840 501 beschrieben sind. Sie werden erhalten durch Polykondensation von Diaminen wie Äthylendiamin, Hexamethylendiamin, Dekamethylendiamin, Dodekamethylendiamin, 2,2,4 und/oder 2,4,4-Trimethylhexamethylendiamin, m- oder p-Xylylendiamin, Bis-(4-aminocyclohexyl)-methan, Bis-(4-amino-cyclohexyl)-propan, 3,3'-Dimethyl-4,4'-diamino-dicyclohexylmethan, 3-Aminomethyl-3,5,5-trimethyl-cyclohexylamin, 2,5- und/oder 2,6-Bis-(aminomethyl)-norbornan oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure oder Terephthalsäure. Selbstverständlich sind auch Copolymere, die durch Polykondensation mehrerer Monomerer erhalten werden, geeignet, ferner solche Copolymere, die unter Zusatz von Aminocarbonsäuren wie $\varepsilon$-Aminocapronsäure, $\omega$-Aminoundecansäure oder $\omega$-Aminolaurinsäure oder ihren Lactamen, hergestellt werden.

Besonders geeignete amorphe Polyamide sind die Polyamide hergestellt aus 80 Gew.-% äquivalenten Mengen an Adipinsäure und 2,2-Bis-(4-aminocyclohexyl)-propan und 20 Gew.-% äquivalenten Mengen an Adipinsäure und Hexamethylendiamin ; oder aus Isophthalsäure und Hexamethylendiamin ; oder aus Isophthalsäure, Hexamethylendiamin und weiteren Diaminen wie 4,4'-Diaminodicyclo-Hexylmethan, Isophorondiamin und/oder 2,2,4- und/oder 2,4,4-Trimethylhexamethylendiamin, 2,5- und/oder 2,6-Bis-(aminomethyl)-norbornan ; oder aus Isophthalsäure, 4,4'-Diaminodicyclohexylmethan und $\varepsilon$-Caprolactam ; oder aus Isophthalsäure, 3,3'-Dimethyl-4,4'-diamino-dicyclohexylmethan und 65 Gew.-% Laurinlactam ; oder aus Terephthalsäure und dem Isomerengemisch aus 2,2,4- und/oder 2,4,4-Trimethylhexamethylendiamin ; oder aus 2,2-Bis-(4-aminocyclohexyl)-propan und einer Mischung von Azelainsäure und Adipinsäure im Molverhältnis 60 zu 40.

Anstelle des reinen 4,4'-Diaminodicyclohexylmethans können auch Gemische der stellungsisomeren Diaminodicyclohexylmethane eingesetzt werden, die sich zusammensetzen aus

70-99 Mol-% der 4,4'-Diaminoisomeren

1-30 Mol-% der 2,4'-Diaminoisomeren

0- 2 Mol-% der 2,2'-Diaminoisomeren und gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Pfropfpolymerisate sind prinzipiell bekannt. Sie können z.B. hergestellt werden durch Emulsionspolymerisation der Pfropfmonomeren mit Hilfe von radikalischen Initiatoren in einem Kautschuklatex. Die Kautschukteilchen in diesem Latex haben bevorzugt mittlere Durchmesser von 0,3-1 μm. Durch das Pfropfpolymerisieren werden diese Teilchen nicht wesentlich vergrößert, so daß auch die Teilchen des Pfropfmischpolymerisats die angegebene Größe haben. Teilchengröße und Teilchendurchmesser bedeutet immer den mittleren Durchmesser $d_{50}$, d.h. den Durchmesser, oberhalb und unterhalb dessen die Durchmesser von jeweils 50 % der betrachteten Teilchen liegen. Pfropfgrad ist das Verhältnis von pfropfpolymerisiertem (= chemisch an den Kautschuk gebundenen) Monomeren zu der Gesamtmenge der polymerisierten Monomeren.

Erfindungsgemäß werden daher unter Pfropfpolymerisaten auch Produkte verstanden, die neben dem Pfropfpolymeren noch Homo- oder Copolymerisate der eingesetzten Polymeren bzw. Monomeren enthalten.

Die Teilchengröße der Pfropfpolymerisate beträgt vorzugsweise 0,1-2 μm, bevorzugt 0,3-1 μm bei einem Pfropfgrad von 0,5-0,9.

Als Pfropfgrundlage eignen sich Polybutadiene oder Copolymerisate aus Butadien und höchstens 30 Gew.-% α,β-ungesättigten Monomeren, wie beispielsweise Styrol, Acrylnitril, niedere Alkylester der Acryl- oder Methacrylsäure. Beispielhaft seien die Butadien/Styrol-Copolymerisate mit bis zu 30 Gew.-% Styrol, die Copolymerisate aus Butadien und Acrylnitril mit bis zu 30 Gew.-% Acrylnitril und die Copolymerisate aus Butadien mit bis zu 30 Gew.-% vorzugsweise 20 Gew.-% eines niederen Alkylesters der Acryl- oder Methacrylsäure (z.B. Methylacrylat, Äthylacrylat, Methylmethacrylat und Äthylmethacrylat) aufgeführt. Polybutadien ist als Pfropfgrundlage besonders bevorzugt.

Das Gewichtsverhältnis der aufgepfropften Monomeren Styrol zu Acrylnitril kann in weiten Grenzen variieren : vorzugsweise sollte es im Bereich von 50 und 95 Gew.-% Styrol zu 5 bis 50 Gew.-% Acrylnitril liegen.

Die Herstellung der erfindungsgemäßen Polymer-Mischungen erfolgt vorteilhafterweise in einem intensiv knetenden Doppelwellenextruder. Es können jedoch auch Einwellenextruder und andere für die Thermoplastenverarbeitung übliche Apparate eingesetzt werden, z.B. Kneter. Das Abmischen der beiden Polymerkomponenten wird vorzugsweise bei Temperaturen von 230 bis 300 °C vorgenommen.

Die erfindungsgemäßen Polyamid-Formmassen können die üblichen Zusätze in üblichen Mengen enthalten wie Gleit- und Entformungsmittel, Füllstoffe, Verstärkungsmittel, Farbstoffe und Pigmente sowie Stabilisatoren und Brandschutzmittel. Zu nennen sind u.a. Glas-, Asbestfasern, Glaskugeln, Talkum, Wollastonit, Mikrovit, Kreide, Quarz, Titandioxid, Zinksulfid, Cadmiumsulfid, Ruß.

Die Zusatzstoffe setzt man vorzugsweise bei der Compoundierung der Formmassen entweder in reiner Form oder als Konzentrate zu. Sie können aber auch in einer oder mehreren der Ausgangskomponenten enthalten sein.

Da sich die Produkte neben ihrer hohen Zähigkeit gleichzeitig durch ihre hohe Seifigkeit und gute Kriechstromfestigkeit auszeichnen, werden sie vorzugsweise zur Herstellung von Teilen im Maschinenbau, von technischen Geräten, im Automobilbau und auf dem Elektrosektor eingesetzt.

Beispiel 1

Ein Polyamid aus Isophthalsäure und Hexamethylendiamin wird mit einem Pfropfpolymerisat von Styrol und Acrylnitril auf Polybutadien auf einer Doppelwellenschnecke von Typ ZSK 32 der Firma Werner und Pfleiderer gemischt. Die Temperatur der Schmelze in der Schnecke beträgt ca. 270 °C, der Durchsatz 4 kg/h, die Drehzahl 40 Umdrehungen/Minute.

Das Polyamid hat eine relative Viskosität von 2,8, gemessen an einer 1 %-igen Lösung in m-Kresol bei 25 °C.

Zur Herstellung des Pfropfpolymerisats (A) werden nach dem Verfahren der Emulsionspolymerisation gemäß den Angaben der Deutschen Auslegeschriften 1 247 665 und 1 269 360 14 Gew.-Teile Styrol und 6 Gew.-Teile Acrylnitril auf 80 Gew.-Teile eines grobteiligen Kautschuks mit einem mittleren Teilchendurchmesser der in Latexform vorliegenden Butadienpfropfgrundlage von 0,3-0,4 μm aufgepfropft.

In der folgenden Tabelle 1 sind die Eigenschaften der Mischungen in Abhängigkeit von der Zusammensetzung dargestellt. In der ersten Spalte sind zum Vergleich die Werte für unmodifiziertes Polyamid angegeben.

Beispiel 2

Ein Polyamid aus Isophthalsäure und einem Diamingemisch bestehend zu 85 Mol-% aus Hexamethylendiamin und 15 Mol-% aus Isophorondiamin, wurde, wie in Beispiel 1 beschrieben, mit dem Pfropfpolymerisat (A) gemischt.

Die Eigenschaften der Mischungen sind in der folgenden Tabelle 2 in Abhängigkeit von der Zusammensetzung dargestellt. Zum Vergleich sind in der ersten Spalte die Werte für das unmodifizierte Polyamid angegeben.

### Tabelle 1

**Mischungen des Polyamids aus Isophthalsäure und Hexamethylendiamin mit dem Pfropfpolymerisat aus Styrol und Acrylnitril auf Polybutadien**

| Zusammensetzung | | Vergleich | | | | | | | | |
|---|---|---|---|---|---|---|---|---|---|---|
| Polyamid | Gew.-% | 100 | 95 | 90 | 85 | 80 | 75 | 65 | 55 | 45 |
| Pfropfpolymeres | Gew.-% | 0 | 5 | 10 | 15 | 20 | 25 | 35 | 45 | 55 |
| Eigenschaftswerte | | | | | | | | | | |
| Kerbschlagzähigkeit (DIN 53 453) | kJ/m$^2$ | 2,5 | 10 | 16 | 62 | 60 | 49 | 30 | 23 | 16 |
| Grenzbiegespannung $\sigma_{bG}$ (DIN 53 452) | MPa | 156 | 139 | 134 | 105 | 115 | 90 | 64 | 53 | 41 |
| E-Modul (Zugvers.) (DIN 53 457) | MPa | | | 2 540 | 2 140 | 2 160 | | | | |
| Wärmeformbeständigkeit nach Vicat, Meth. B (DIN 53 460) | °C | 124 | 123 | 125 | 122 | 124 | | | | |

### Tabelle 2

**Mischungen des Polyamids aus Isophthalsäure, 85 Mol-% Hexamethylendiamin und 15 Mol-% Isophorondiamin mit Pfropfpolymerisat aus Styrol und Acrylnitril auf Polybutadien**

| Zusammensetzung | | Vergleich | | | | | | | | |
|---|---|---|---|---|---|---|---|---|---|---|
| Polyamid | Gew.-% | 100 | 95 | 90 | 85 | 80 | 75 | 65 | 55 | 45 |
| Pfropfpolymeres | Gew.-% | 0 | 5 | 10 | 15 | 20 | 25 | 35 | 45 | 55 |
| Eigenschaftswerte | | | | | | | | | | |
| Kerbschlagzähigkeit (DIN 53 453) | kJ/m$^2$ | 2 | 8 | 13 | 43 | 32 | 33 | 24 | 19 | 15 |
| Grenzbiegespannung $\sigma_{bG}$ (DIN 53 452) | MPa | 171 | 153 | 125 | 120 | 117 | 95 | 68 | 54 | 42 |
| E-Modul (Zugvers.) (DIN 53 457) | MPa | | | 2 660 | 2 340 | 2 290 | | | | |
| Wärmeformbeständigkeit nach Vicat, Meth. B (DIN 53 460) | °C | 141 | 141 | 142 | 140 | 143 | 136 | 133 | 129 | 122 |

### Beispiel 3

Ein Polyamid aus Isophthalsäure und Terephthalsäure im Molverhältnis 95 : 5 und einer äquivalenten Menge einer Mischung aus Hexamethylendiamin und Isophorondiamin im Molverhältnis 90 : 10 wird wie in Beispiel 1 beschrieben, mit dem Pfropfpolymerisat (A) gemischt.

Die Eigenschaften der Mischungen sind in der folgenden Tabelle 3 in Abhängigkeit von der Zusammensetzung dargestellt. Zum Vergleich sind in der ersten Spalte die Werte für das unmodifizierte Polyamid angegeben.

### Beispiel 4

Ein Polyamid aus Terephthalsäure und dem Isomergemisch aus 2,2,4- und 2,4,4-Trimethylhexamethylendiamin wurde, wie in Beispiel 1 beschrieben, mit verschiedenen Mengen des Pfropfpolymerisats (A) gemischt. Die Ergebnisse sind wie folgt:

| | | | | | Vergleich |
|---|---|---|---|---|---|
| Pfropfpolymerisat in der Mischung | Gew.-% | 10 | 20 | 30 | 0 |
| Kerbschlagzähigkeit (DIN 53 453) | kJ/m$^2$ | 13 | 47 | 33 | 7 |
| Grenzbiegespannung $\sigma_{bG}$ (DIN 53 452) | MPa | 114 | 94 | 75 | 120 |

0 014 879

Tabelle 3

Mischungen des Polyamids aus Isophthalsäure und Terephthalsäure (Molverhältnis (95: 5) und Hexamethylendiamin und Isophorondiamin (Molverhältnis 90: 10) mit dem Pfropfpolymerisat aus Styrol und Acrylnitril auf Polybutadien

| Zusammensetzung | | Vergleich | | | | | | | | |
|---|---|---|---|---|---|---|---|---|---|---|
| Polyamid | Gew.-% | 100 | 95 | 90 | 85 | 80 | 75 | 65 | 55 | 45 |
| Pfropfpolymeres | Gew.-% | 0 | 5 | 10 | 15 | 20 | 25 | 35 | 45 | 55 |
| Eigenschaftswerte | | | | | | | | | | |
| Kerbschlagzähigkeit (DIN 53 453) | kJ/m$^2$ | 3 | 9 | 16 | 56 | 57 | 42 | 28 | 21 | 16 |
| Grenzbiegespannung $\sigma_{bG}$ (DIN 53 452) | MPa | 166 | 149 | 138 | 117 | 112 | 92 | 70 | 55 | 40 |
| E-Modul (Zugvers.) (DIN 53 457) | MPa | | | 2 160 | 2 240 | 2 240 | | | | |
| Wärmeformbeständigkeit nach Vicat, Meth. B (DIN 53 460) | °C | 135 | 135 | 137 | 133 | 136 | 129 | 126 | 122 | 117 |

## Beispiel 5

85 Gew.-Teile eines Copolyamids aus 65 Gew.-% Laurinlactam und 35 Gew.-% äquivalenter Mengen 3,3'-Dimethyl-4,4'-diamino-dicyclohexylmethan und Isophthalsäure werden wie in Beispiel 1 beschrieben, mit 15 Gew.-Teilen des Pfropfpolymerisats (A) gemischt.

Die Kerbschlagzähigkeit der Mischung beträgt 32 kJ/m$^2$ (5 kJ/m$^2$), die Grenzbiegespannung 93 MPa (120 MPa). (Die Vergleichswerte in Klammern wurden am unmodifizierten Polyamid gemessen).

## Beispiel 6

Ein Polyamid aus 80 Gew.-% äquivalenter Mengen an Adipinsäure und Bis-(4-aminocyclohexyl)-propan und 20 Gew.-% äquivalenter Mengen an Adipinsäure und Hexamethylendiamin wurde, wie in Beispiel 1 beschrieben, mit verschiedenen Mengen des Pfropfpolymerisats (A) gemischt. Es wurden folgende Eigenschaften gemessen :

| Pfropfpolymerisat in der Mischung | Gew.-% | 10 | 20 | 30 | 0 | (z. Vergl.) |
|---|---|---|---|---|---|---|
| Kerbschlagzähigkeit (DIN 53 453) | kJ/m$^2$ | 8 | 15 | 17 | 4 | |
| Grenzbiegespannung $\sigma_{bG}$ (DIN 53 452) | MPa | 118 | 94 | 77 | 130 | |

## Beispiel 7

83 Gew.-Teile eines Polyamids aus Isophthalsäure und einem Diamingemisch, bestehend aus 85 Mol-% aus Hexamethylendiamin und 15 Mol-% aus dem Gemisch der stellungsisomeren Diaminodicyclohexylmethane mit einem Gehalt von 4,2 % der 2,4'-Diaminoisomeren und 0,2 % der 2,2-Diaminoisomeren neben den 4,4'-Diaminoisomeren wurden wie in Beispiel 1 beschrieben, mit 17 Gew.-Teilen des Pfropfpolymerisats (A) gemischt.

Die Kerbschlagzähigkeit der Mischung beträgt 43 kJ/m$^2$ (2,9 kJ/m$^2$), die Grenzbiegespannung 112 MPa (170 Mpa). Die Vergleichswerte in Klammern wurden am unmodifizierten Polyamid gemessen.

## Beispiel 8

Zur Herstellung eines Pfropfpolymerisats (B) mit 50 Gew.-Teilen Kautschuk werden nach dem Verfahren der Emulsionspolymerisation gemäß den Angaben der Deutschen Auslegeschrift 1 247 665 und 1 269 360 36 Gew.-Teile Styrol und 14 Gew.-Teile Acrylnitril auf 50 Gew.-Teile eines grobteiligen Kautschuks mit einem mittleren Teilchendurchmesser der in Latexform vorliegeden Polybutadienpfropfgrundlage von 0,3-0,4 µm aufgepfropft.

85 Gew.-Teile eines Polyamids aus Isophthalsäure und Hexamethylendiamin werden, wie in Beispiel 1 beschrieben, mit 15 Gew.-Teilen des Pfropfpolymerisats (B) gemischt.

Die Kerbschlagzähigkeit der Mischung beträgt 17 kJ/m$^2$, die Grenzbiegespannung 125 MPa.

5

## Beispiel 9

88 Gew.-Teile eines Polyamids aus Isophthalsäure und Hexamethylendiamin werden, wie in Beispiel 1 beschrieben, mit 6 Gew.-Teilen des Pfropfpolymerisats (A) und 6 Gew.-Teilen des Pfropfpolymerisats (B) gemischt.

Die Kerbschlagzähigkeit der Mischung beträgt 17 kJ/m², die Grenzbiegespannung 128 MPa.

### Ansprüche

1. Schlagzähe Polymer-Mischungen aus

I. 99-40 Gew.-% amorphen Polyamiden und

II. 1-60 Gew.-% Pfropfpolymerisaten aus

a) 45-95 Gew.-% Polybutadien oder Copolymerisaten des Butadiens und $\alpha,\beta$-ungesättigten Monomeren, wobei die Copolymerisate, die zu wenigstens 70 Gew.-% aus Butadien bestehen, als Pfropfgrundlage dienen und

b) 5-55 Gew.-% aufgepfropfter Einheiten von Styrol und Acrylnitril,

wobei sich die Komponenten I und II bzw. a) und b) jeweils auf 100 Gew.-% addieren.

2. Polymermischungen nach Anspruch 1, bestehend aus 95-70 Gew.-% der Polymerkomponente I und 5-30 Gew.-% der Polymerkomponente II.

3. Polymermischungen nach Ansprüchen 1 und 2, dadurch gekennzeichnet, daß das Pfropfpolymerisat aus 50-90 Gew.-% der Komponente a) und 10-50 Gew.-% der Komponente b) aufgebaut ist.

4. Polymermischungen nach Ansprüchen 1-3, dadurch gekennzeichnet, daß die Komponente II b, aus 50-95 Gew.-% Styrol und 5-50 Gew.-% Acrylnitril aufbaut.

5. Polymermischungen nach Ansprüchen 1-4, dadurch gekennzeichnet, daß die Teilchengröße der Pfropfpolymerisate 0,1-2 µm und ihr Pfropfgrad 0,5-0,9 beträgt.

### Claims

1. High-impact polymer mixtures of

I. 99-40 % by weight of amorphous polyamides and

II. 1-60 % by weight of graft polymers of

a) 45-95 % by weight of polybutadiene or copolymers of butadiene and $\alpha,\beta$-unsaturated monomers, the copolymers, of which at least 70 % by weight consists of butadiene, serving as the graft base and

b) 5-55 % by weight of grafted-on units of styrene and acrylonitrile,

components I and II, and components a) and b) amounting in each case to 100 % by weight.

2. Polymer mixtures according to Claim 1, consisting of 95-70 % by weight of the polymer component I and 5-30 % by weight of the polymer component II.

3. Polymer mixtures according to Claims 1 and 2, characterised in that the graft polymer consists of from 50 to 90 % by weight of component a) ant 10 to 50 % by weight of component b).

4. Polymer mixtures according to Claims 1 to 3, characterised in that the component II b) consists of from 50 to 95 % by weight of styrene and from 5 to 50 % by weight of acrylonitrile.

5. Polymer mixtures according to Claims 1 to 4, characterised in that the particle size of the graft polymers is from 0.1 to 2 µm and their degree of grafting is from 0.5 to 0.9.

### Revendications

1. Mélanges de polymères résistant au choc, au départ de

I. 99-40 % en poids de polyamides amorphes et de

II. 1-60 % en poids de polymères greffés obtenus à partir de

a) 45-95 % en poids de polybutadiène ou de copolymères de butadiène et de monomères $\alpha,\beta$-insaturés, les copolymères, qui contiennent au moins 70 % en poids de butadiène, servant de substrat de greffage et de

b) 5-55 % en poids d'unités greffées de styrène et d'acrylonitrile,

les composants de I) et II) et respectivement a) et b) s'additionnant chaque fois pour faire 100 % en poids.

2. Mélanges polymères selon la revendication 1, consistant en 95-70 % en poids du composant polymère I et en 5-30 % en poids du composant polymère II.

3. Mélanges polymères selon les revendications 1 et 2, caractérisés en ce que le polymère greffé est constitué à partir de 50-90 % en poids du composant a) et de 10-50 % en poids du composant b).

4. Mélanges polymères selon les revendications 1 à 3, caractérisés en ce que le composant II b) est constitué à partir de 50-95 % en poids de styrène et de 5-50 % en poids d'acrylonitrile.

5. Mélanges polymères selon les revendications 1 à 4, caractérisés en ce que la dimension de particule des polymères greffés s'élève à 0,1-2 µm et leur degré de greffage à 0,5-0,9.